# FASCICULE DE BREVET EUROPEEN

(11) **EP 3 648 960 B1**
(45) Date de publication et mention de la délivrance du brevet: **11.02.2026**
(21) Numéro de dépôt: 18816711.8
(22) Date de dépôt: 18.06.2018
(51) Int. Cl.: B29C 70/68, B64D 11/06, B29C 70/86, B29C 70/48, B29C 70/30

(54) **PROCEDE DE FABRICATION D'UN PANNEAU COMPOSITE**
VERFAHREN ZUR HERSTELLUNG EINER VERBUNDPLATTE
PROCESS FOR MANUFACTURING A COMPOSITE PANEL

(30) Priorité: 16.06.2017 CA 2971066
(43) Date de publication de la demande: 13.05.2020
(73) Titulaire: Hutchinson Aéronautique & Industrie LTÉE, Montréal, Québec H1B 5M8 (CA)
(72) Inventeur: LÉVESQUE, Martin, Terrebonne, Québec J6W 5Z9 (CA); LAROSE, Jean-philippe, Montréal, Québec H1Y 2S2 (CA); GUILLEMAND, Franck, St-Catherine, Québec J5C 1S4 (CA)
(74) Mandataire: Gevers & Orès
(86) Numéro de dépôt international: PCT/CA2018/050738
(87) Numéro de publication internationale: WO 2018/227309

(56) Documents cités:
- EP-A2- 1 946 912
- WO-A1-2016/015735
- WO-A1-2016/087346
- WO-A1-2016/087346
- WO-A1-83/03794
- CA-A1- 2 760 287
- GB-A- 1 366 773
- GB-A- 2 212 436
- GB-A- 2 547 468
- JP-A- 2014 031 015
- US-A- 5 114 762
- US-A1- 2007 205 654

## Description

L'invention concerne un procédé de fabrication d'un panneau composite.

Un tel panneau peut notamment former un composant de siège, par exemple un siège d'avion.

Un tel panneau composite peut être formé d'un empilement de nappes, généralement réalisées avec des fibres, entre lesquelles se trouve un élément structurant qui permet de définir le contour du panneau.

Les procédés classiques se basent sur la réalisation de cet empilement puis de sa fabrication proprement dite dans un moule. Cependant, ces procédés classiques nécessitent, après avoir fabriqué le panneau, de réaliser une découpe pour définir la forme au net du contour du panneau.

Cette étape de découpe nécessite un outillage spécifique et donc du temps supplémentaire.

En conséquence, les fabricants cherchent des solutions pour simplifier la fabrication de tels panneaux, tant pour des raisons de coûts que de temps, tout en obtenant un panneau composite aux contours nets.

Le document WO 2016/087346 A1 décrit un procédé de fabrication d'un panneau composite comprenant une corde entourant le panneau et plusieurs couches composites dont au moins une est enroulée autour de la corde. Des procédés similaires, tels que proposés par WO 83/03794 A1, GB 2 212 436 A ou GB 1366 773 A, peuvent être utilisés notamment pour la fabrication de raquettes, en particulier de tennis.

Un objectif de l'invention est de répondre au problème précité.

A cet effet, l'invention propose un procédé de fabrication d'un panneau composite selon la revendication 1.

Ce procédé pourra également présenter l'une au moins des caractéristiques suivantes, prises seules ou en combinaison :
- dans le cas où l'étape c₁) est mise en œuvre, on replie, entre les étapes b) et c₁), une partie de la première nappe sur l'élément structurant, cette partie comportant ledit contour périphérique ;
- avant ou après le repliement de la partie concernée de la première nappe, mais de préférence avant, on applique un adhésif sur ladite partie de la première nappe comportant ledit contour périphérique ;
- le matériau formant la première nappe est choisi parmi des fibres de carbone, des fibres de verre ou des fibres de Kevlar^{®} ;
- le matériau formant la deuxième nappe est choisi parmi des fibres de carbone, des fibres de verre ou des fibres de Kevlar^{®} ;
- la résine thermoplastique injectée à l'étape d) est choisie parmi le polyuréthane, le polyétherimide, ou le polyamide ;
- la résine thermodurcissable injectée à l'étape d) est choisie parmi une résine thermodurcissable de type époxyde, phénolique ou uréthane ;
- l'étape e) s'accompagne d'un chauffage ;
- à l'issue de l'étape e), on prévoit une étape f) de post-cuisson, avantageusement réalisée dans le moule ayant permis d'obtenir le panneau ;
- l'élément structurant disposé au cours de l'étape b) sur la première nappe présente la forme souhaitée du contour périphérique du panneau composite ;
- l'élément structurant est choisi parmi un ensemble de fibres tissées, par exemple sous la forme d'une tresse ; un ensemble de fibres non tissées; une résine thermodurcissable ou thermoplastique, sous forme solide ; une mousse syntactique ;
- l'élément structurant consiste en un ensemble de fibres tissées ou non tissées, lesdites fibres étant choisies parmi des fibres de carbone, des fibres de verre ou des fibres de Kevlar^{®} ;
- l'ensemble de fibres tissées ou non tissées est pré-imprégné d'une résine thermoplastique ou thermodurcissable ;
- l'ensemble de fibres tissées ou non tissées est pré-imprégné d'une résine thermoplastique choisie parmi le polyuréthane, le polyétherimide, ou le polyamide ;
- l'ensemble de fibres tissées ou non tissées est pré-imprégné d'une résine thermodurcissable choisie parmi une résine thermodurcissable de type époxyde, phénolique ou uréthane ;
- l'ensemble de fibres tissées se présente sous la forme d'une tresse.
- l'élément structurant est une résine thermodurcissable de type époxyde.

L'invention sera mieux comprise et d'autres buts, avantages et caractéristiques de celle-ci apparaîtront plus clairement à la lecture de la description qui suit et qui est faite au regard des figures annexées suivantes :
- La figure 1, qui comprend les figures 1(a) à 1(e), représente un panneau composite, en l'occurrence un dossier de siège pour avion, obtenu selon un premier procédé de fabrication selon l'invention ;
- La figure 2, qui comprend les figures 2(a) à 2(d), représente un panneau composite, en l'occurrence un accoudoir de siège pour avion, obtenu selon un deuxième procédé de fabrication selon l'invention;
- La figure 3, qui comprend les figures 3(a) à 3(e), représente la structure obtenue à l'issue de différentes étapes de fabrication, selon l'invention, d'un panneau composite.

Un premier procédé de fabrication d'un panneau composite PC selon l'invention est décrit ci-après.

Ce premier mode de réalisation est particulièrement bien adapté pour fabriquer un panneau composite destiné à former un composant de siège tel qu'un dossier ou un support de tête pour lequel, à masse donnée, une résistance mécanique importante est souhaitable.

Le procédé comprend les étapes suivantes:
- fournir une première nappe NP1 d'un matériau sec, tissé ou non tissé, ladite première nappe définissant un contour périphérique CP ;
- disposer un élément structurant ES, à savoir soit un ensemble de fibres tissées, se présentant par exemple sous la forme d'une tresse EST, soit un ensemble de fibres EF non tissées, , à l'intérieur du contour périphérique CP de ladite première nappe NP1, sur au moins une partie de ce contour périphérique ; puis :
   - soit disposer une deuxième nappe NP2 d'un matériau sec, tissé ou non tissé, de sorte que ladite deuxième nappe NP2 recouvre à la fois la première nappe NP1 et l'élément structurant ES,
   - soit replier une partie de la première nappe NP1, cette partie comportant le contour périphérique CP, pour recouvrir l'élément structurant ES puis disposer une deuxième nappe NP2 d'un matériau sec, tissé ou non tissé, de sorte que ladite deuxième nappe NP2 recouvre la première nappe NP1, mais pas l'élément structurant ES ;
l'empilement ainsi formé à l'issue de cette dernière étape étant soit déjà dans un moule soit hors d'un moule et alors placé dans ledit moule,
- injecter une résine thermoplastique ou thermodurcissable dans le moule, notamment pour imprégner les nappes NP1, NP2 ;
- presser l'ensemble dans le moule pour obtenir le panneau composite.

L'étape de pressage peut s'accompagner d'un chauffage.

Par matériau « sec » (nappes NP1, NP2), il convient de comprendre que la nappe n'est pas un « prepreg ». Ceci est important car une nappe NP1, NP2 réalisée en un matériau sec, qu'il soit tissé ou non tissé, présente une grande déformabilité, ce qui facilite grandement sa manipulation et le recouvrement d'une autre nappe et/ou de l'élément structurant. En effet, avec des nappes « prepreg », le recouvrement, bien que possible n'est pas aisé, et donne lieu à une surépaisseur visible sur le panneau composite finalement obtenu ; et ce n'est pas le cas avec des nappes en matériau « sec », puisque la résine injectée dans le moule va permettre de mieux lisser la différence de niveau, notamment dans le cas d'un moule réalisé en deux parties correspondantes. Ceci est d'autant plus vrai que, pour les applications visées, le panneau composite à fabriquer présente une forme complexe. Par rapport à un « prepreg », on gagne donc en temps de pose et en conséquence en coûts. Par ailleurs, comme le placement d'une nappe en tissu sec est plus aisé qu'avec un « prepreg », la tenue mécanique de la pièce composite finalement obtenue est meilleure pour un tel panneau composite de forme complexe.

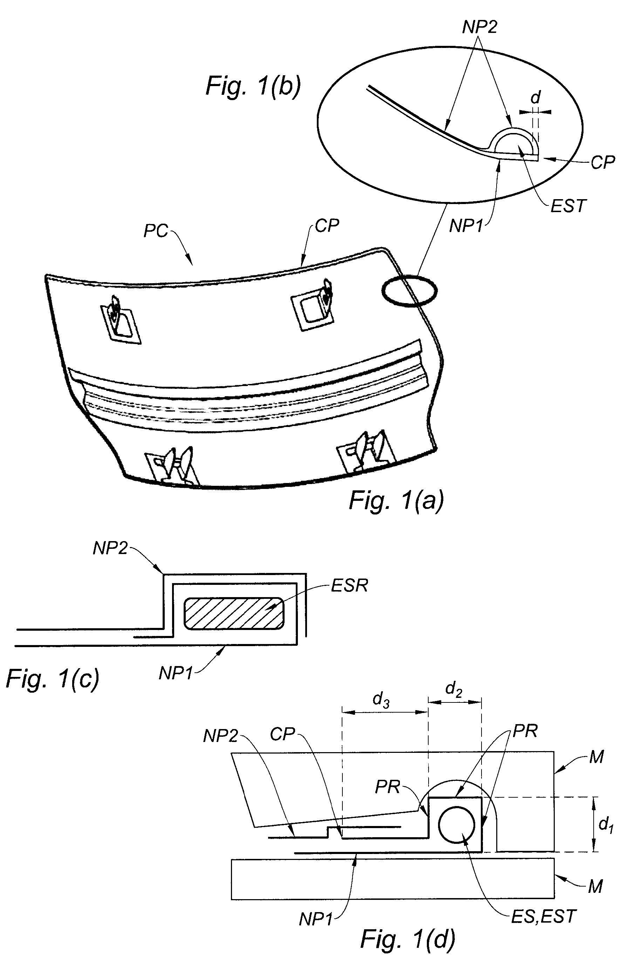

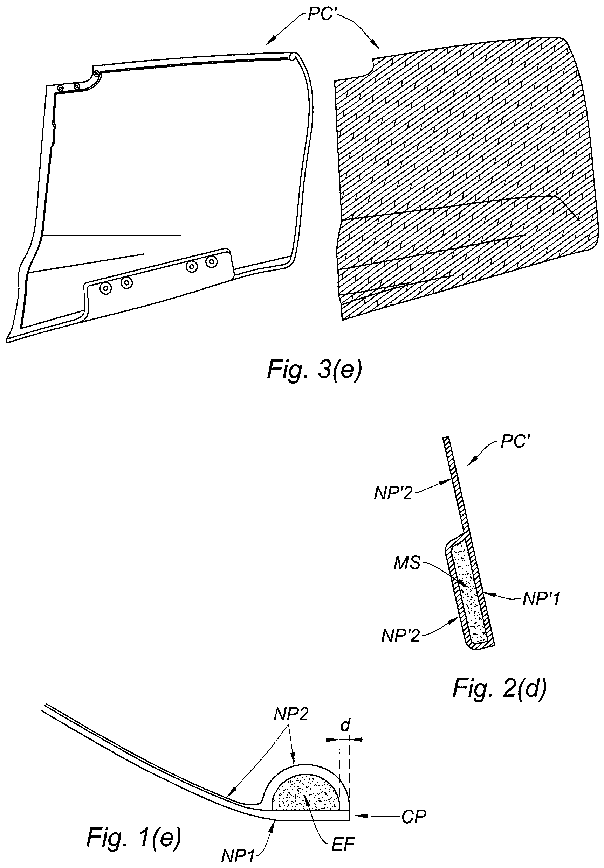

Un exemple de panneau composite obtenu à l'issue de ce procédé de fabrication est représenté sur la figure 1, en l'occurrence lorsque l'élément structurant est une tresse EST ; c'est-à-dire un cas particulier d'un ensemble de fibres tissées. D'ailleurs, dans la suite de la description, et par souci de simplifications, le cas de la tresse EST sera considéré comme étant représentatif des commentaires susceptibles d'être réalisés pour un ensemble quelconque de fibres tissées.

Plus précisément, les figures 1(a) et 1(b) représentent respectivement selon une vue en perspective générale et selon une vue en coupe sur la figue 1(b), le panneau composite obtenu à l'issue du procédé de fabrication dans le cas où la deuxième nappe NP2 recouvre à la fois la première nappe NP1 et l'élément structurant ES, en l'occurrence une tresse EST.

Par ailleurs, sur la figure 1(b), on peut notamment observer la distance d, non nulle, séparant la tresse EST du contour périphérique CP de la première nappe NP1. Cette distance d, non nulle, montre que la tresse EST est bien, au cours de la fabrication, disposée à l'intérieur du contour périphérique CP de ladite première nappe NP1. Par ailleurs, dans le cas d'espèce qui est représenté sur les figures, la tresse est présente à l'intérieur du contour périphérique CP de la première nappe NP1, sur l'ensemble du contour périphérique de la première nappe NP1.

Bien entendu, le cas présenté à l'appui des figures 1(a) et 1(b) est applicable dans le cas où la tresse EST est remplacée par des fibres non tissées.

Il convient de noter que l'on peut prévoir une étape additionnelle, après avoir disposé la tresse EST ou l'ensemble EF de fibres tissées, sur la première nappe NP1 et avant de recouvrir le tout par la deuxième nappe NP2, étape additionnelle au cours de laquelle on replie une partie de la première nappe NP1 autour de la tresse EST ou l'ensemble de fibres EF, cette partie comportant ledit contour périphérique CP. Avant le repliement de cette partie de la première nappe NP1, le contour périphérique CP est donc situé externalement par rapport à la tresse EST ou l'ensemble de fibres EF ; et ce n'est plus le cas après repliement.

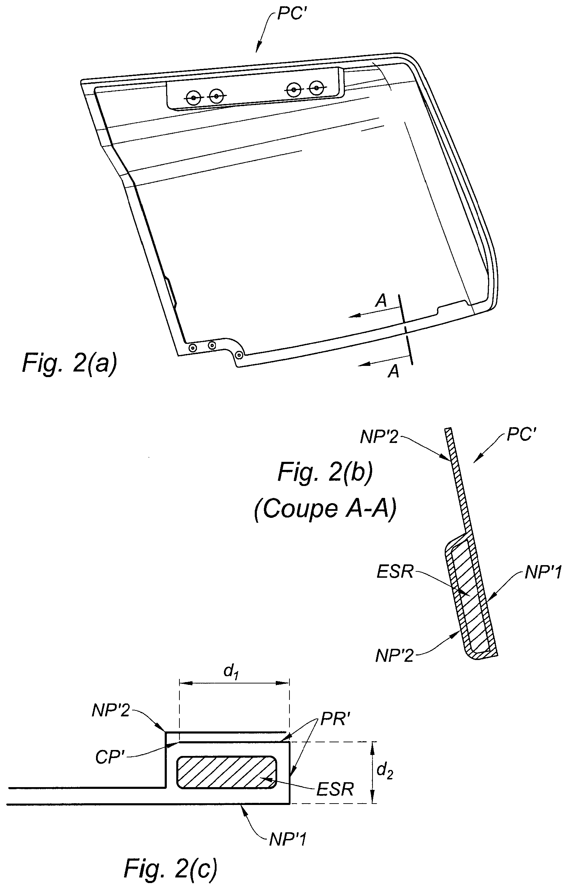

C'est ce qui est représenté sur la figure 1(c).Ce cas de retournement de la première nappe NP1 correspond, pour le deuxième mode de réalisation qui sera décrit ultérieurement, au schéma de la figure 2(c).

Ceci permet de mieux maintenir la tresse EST ou, selon le cas, l'ensemble EF de fibres tissées, en place avant la mise sous pression, dans le moule, de l'empilement formé par la première nappe NP1, la tresse EST ou l'ensemble EF de fibres tissées et la deuxième nappe NP2. En particulier, il y a moins de risques, lors de la fabrication, que les fibres de l'extrémité de la nappe NP1 se retrouvent coincés dans le moule. Par ailleurs, sur la pièce finie, on améliore la tenue mécanique, tout en limitant la zone de surépaisseur, à trois nappes (NP1, NP1, NP2). Il convient de noter que cette étape additionnelle n'est pas obligatoire, mais est parfois très avantageuse.

Cependant, lorsque cette étape additionnelle de repliement est envisagée, il est avantageux, avant ou après le repliement, mais de préférence avant, d'appliquer un adhésif sur la partie de la première nappe NP1 comportant le contour périphérique CP. Cela permet en effet d'améliorer le maintien de la partie de la première nappe NP1 repliée contre la tresse EST ou l'ensemble EF de fibres tissées et donc de pouvoir, ensuite, disposer la deuxième nappe NP2 en s'assurant que le positionnement relatif de la première nappe NP1 et de la tresse EST ou de l'ensemble EF de fibres tissées n'a pas évolué.

Sur la figure 1(d), on a représenté selon une vue en coupe, le positionnement dans le moule M, avant pressage et chauffage des différentes composants du panneau composite à fabriquer, dans le cas où la deuxième nappe NP2 ne recouvre que la première nappe NP1, sans recouvrir l'élément structurant, en l'occurrence une tresse EST.

Par rapport à la réalisation de la figure 1(c), on conserve les avantages fournis par le retournement de la première nappe NP1. Par ailleurs, la mise en place de la deuxième nappe NP2 peut être plus aisée. En revanche, la zone de surépaisseur à trois nappes (NP1, NP1, NP2) est plus étendue.

Le choix de la configuration de la figure 1(b), 1(c) ou 1(d) dépendra de l'application envisagée.

Ici, la distance d, non nulle, séparant la tresse EST du contour périphérique CP de la première nappe NP1 doit être suffisante pour que le repliement d'une partie de la première nappe NP1 permette de recouvrir la tresse. Sur la figure 1(d), on peut relever que cette distance d vaut d = d₁ + d₂ + d₃. Cette distance d définit, la partie PR de la première nappe NP1 qui est repliée.

Bien entendu, le cas présenté sur la figure 1(d) est applicable lorsque la tresse EST est remplacée par un ensemble EF de fibres non tissées.

Un ensemble de fibres EF non tissées est représenté schématiquement, selon une vue en coupe, sur la figure 1(e). La figure 1(e) correspond simplement au cas de la figure 1(b), mais avec des fibres non tissées. L'utilisation d'une tresse EST ou, selon le cas, d'un ensemble EF de fibres non tissées permet d'apporter, sur le panneau composite PC finalement réalisé à l'issue du procédé de fabrication, la résistance mécanique souhaitée.

Le matériau formant la première nappe NP1 peut être choisi parmi des fibres de carbone, des fibres de verre ou des fibres de Kevlar^{®}.

Par ailleurs, le matériau formant la deuxième nappe NP2 peut être est choisi parmi des fibres de carbone, des fibres de verre ou des fibres de Kevlar^{®}.

On pourra notamment choisir une deuxième nappe NP2 réalisée dans un matériau identique que celui formant la première nappe NP1. En particulier, la deuxième nappe NP2 peut être réalisée en fibres de carbone, tout comme la première nappe NP1.

Quelle que soit la nappe considérée, les fibres de carbone peuvent par exemple se présenter sous la forme d'un tissu en fibres de carbone.

En ce qui concerne l'élément structurant ES, les fibres de la tresse EST (fibres tissées) ou les fibres non tissées peuvent notamment être choisies parmi des fibres de carbone, des fibres de verre ou des fibres de Kevlar^{®}.

La tresse EST, ou l'ensemble EF de fibres non tissées, peut être pré-imprégné(e) d'une résine thermoplastique ou thermodurcissable.

La résine thermoplastique peut alors être choisie parmi le polyuréthane (PU), le polyétherimide (PEI), ou le polyamide (PA). La résine thermodurcissable peut être choisie parmi une résine thermodurcissable de type époxyde, phénolique ou uréthane.

La tresse EST ou, selon le cas l'ensemble EF de fibres non tissées, est destiné à définir la forme du contour périphérique du panneau composite, à savoir ici du composant de siège à fabriquer.

A cet effet, on peut prévoir que la tresse EST ou selon le cas l'ensemble EF de fibres non tissées présente déjà, au moment de son positionnement sur la première nappe NP1, la forme souhaitée du contour pour le panneau composite. Ceci peut être réalisé dans un moule spécifique, qui est mis à profit pour pré-imprégner la tresse EST, ou l'ensemble EF de fibres non tissées, de résine thermoplastique ou thermodurcissable. Dans ce cas, les étapes de fabrication du panneau composite PC décrites précédemment et réalisées dans le moule (injection de résine, notamment pour imprégner les nappes; mise sous pression et éventuellement température) ne serviront qu'à assurer le lien mécanique entre la première nappe NP1, la tresse EST ou l'ensemble EF de fibres non tissées, et la deuxième nappe NP2 pour former le panneau composite PC, la forme de son contour ayant été défini précédemment.

En variante, , la mise en forme de la tresse EST ou, selon le cas de l'ensemble EF de fibres non tissées, à celle du contour périphérique CP du panneau composite peut être définie par celle du moule dans l'empilement comportant la première nappe NP1, la tresse EST ou selon le cas l'ensemble EF de fibres non tissées et la deuxième nappe NP2, pour sa mise sous pression et éventuellement mise sous température afin d'obtenir effectivement ledit panneau composite PC. Dans ce cas, la tresse EST ou, selon le cas, l'ensemble EF de fibres non tissées n'est avantageusement pas pré-imprégné avant son positionnement sur la première nappe NP1, pour faciliter sa mise en forme. On profite alors de l'étape ultérieure d'injection de résine thermoplastique ou thermodurcissable pour imprégner la tresse ou l'ensemble de fibres non tissées, la mise en forme de l'élément structurant ES au contour périphérique du panneau composite s'effectuant alors au moment de la mise sous pression dans le moule.

La solution consistant à préformer la tresse EST ou, selon le cas l'ensemble EF de fibres non tissées, dans un moule spécifique est plus aisée à mettre en œuvre que la solution consistant à former la tresse avec les autres composants destinés à former le panneau composite.

Lorsque la tresse EST ou l'ensemble EF de fibres non tissées n'est pas imprégné d'une résine thermoplastique ou thermodurcissable avant d'être mis sur la première nappe, la forme de la tresse EST peut être définie par celle du moule dans l'empilement comportant la première nappe NP1, la tresse EST et la deuxième nappe NP2, pour sa mise sous pression et mise sous température afin d'obtenir effectivement ledit panneau composite PC.

La résine injectée dans le moule, pour imprégner notamment les nappes (mais aussi la tresse ou l'ensemble de fibres non tissées lorsque, notamment, ceux-ci n'ont pas été pré-imprégnés), peut être une résine thermoplastique choisie parmi le polyuréthane (PU), le polyétherimide (PEI), ou le polyamide (PA).Par exemple, pour du polyétherimide (PEI), l'injection s'effectue, en fonction de la nature exacte du polyétherimide employé, à une pression comprise entre 70MPa et 125MPa et à une température comprise entre 350°C et 400°C (sous forme liquide).

En variante, la résine injectée dans le moule, pour imprégner notamment les nappes, peut être une résine thermodurcissable choisie parmi une résine thermodurcissable de type époxyde, phénolique ou uréthane.

Typiquement, l'étape consistant à presser l'empilement ayant été imprégné de résine dans le moule s'effectue dans les conditions de pression suivante : pression d'au moins 0.065 Mpa (20 in-Hg). La température lors du pressage peut aller de la température ambiante (pas de chauffage) à quelques dizaines de degrés au-delà de la température ambiante (chauffage) en fonction de la nature chimique de la résine employée.

En outre, il convient de noter que l'étape de fourniture de la première nappe NP1 peut consister à fournir une pluralité de premières nappes empilées. De manière similaire, l'étape de disposition de la deuxième nappe NP2 peut consister à disposer une pluralité de deuxièmes nappes empilées, recouvrant toutes à la fois la première nappe NP1 (ou ladite pluralité de premières nappes) et la tresse EST ou, selon le cas, l'ensemble de fibres EF, tissées ou non tissées.

En outre, à l'issue des étapes décrites précédemment, on peut prévoir une post-cuisson, avantageusement réalisée dans le moule dans lequel le panneau composite PC a été formé, pour ajuster les propriétés mécaniques du composant.

Un deuxième procédé de fabrication d'un panneau composite, en l'occurrence formant un composant de siège selon l'invention est décrit ci-après.

Ce deuxième mode de réalisation est particulièrement bien adapté pour fabriquer un panneau composite destinée à former un composant de siège tel qu'un panneau latéral d'un accoudoir pour lequel, à masse donnée, la résistance mécanique peut être moins importante que pour un dossier de siège par exemple.

Dans ce cas, l'élément structurant ES est une résine ESR thermoplastique ou thermodurcissable. En particulier, mais non limitativement, la résine alors employée peut être une résine thermodurcissable de type époxyde.

Le procédé de fabrication du panneau comprend alors les étapes suivantes:
- fournir une première nappe NP'1 d'un matériau sec, tissé ou non tissé, ladite première nappe définissant un contour périphérique ;
- disposer un élément structurant ES, en l'occurrence soit une résine ESR thermoplastique ou une résine thermodurcissable, sous forme solide, soit une mousse syntactique MS, à l'intérieur du contour périphérique CP' de ladite première nappe, sur au moins une partie de ce contour périphérique, cet élément structurant ES' présentant une forme destinée à définir la forme du contour dudit panneau composite; puis
   - soit disposer une deuxième nappe NP'2 d'un matériau sec, tissé ou non tissé, de sorte que ladite deuxième nappe NP'2 recouvre à la fois la première nappe NP'1 et l'élément structurant ES,
   - soit replier au moins une partie PR' de la première nappe NP'1, cette partie comportant le contour périphérique CP', pour recouvrir l'élément structurant puis disposer une deuxième nappe NP'2 d'un matériau sec, tissé ou non tissé, de sorte que ladite deuxième nappe NP'2 ne recouvre que la première nappe NP'1, sans recouvrir l'élément structurant ES ;
      l'empilement ainsi formé à l'issue de cette dernière étape étant soit déjà dans un moule soit hors d'un moule et alors placé dans ledit moule,
   - injecter une résine thermoplastique ou thermodurcissable dans le moule, notamment pour imprégner les nappes NP'1, NP'2 ;
   - presser l'ensemble dans le moule pour obtenir le panneau composite.

L'étape de pressage peut s'accompagner d'un chauffage.

Par matériau « sec » (nappes NP'1, NP'2), il convient de comprendre que la nappe n'est pas un « prepreg ». Les avantages que cela procure sont les mêmes que ceux exposés à l'appui de la description du premier mode de réalisation.

Un exemple de panneau obtenu à l'issue de ce procédé de fabrication est représenté sur la figure 2, selon une vue en perspective générale sur la figure 2(a) et selon une vue en coupe sur la figue 2(b), dans le cas où l'élément structurant est une résine ESR. Cette résine ESR peut notamment être une résine thermodurcissable de type époxyde.

La figure 2(d) correspond à la figure 2(b), mais dans le cas d'une mousse syntactique MS. La mousse syntactique MS peut par exemple être l'Airex^{®} C70.90.

La figure 2(c) montre plus précisément l'agencement de la résine ESR et des nappes, pour cet exemple. Cela correspond au cas où la deuxième nappe NP'2 recouvre à la fois la première nappe NP'1 et l'élément structurant ES, en l'occurrence une résine ESR thermoplastique ou thermodurcissable ou une mousse syntactique MS.

Plus encore, la figure 2(c) est un cas dans lequel une étape additionnelle a été mise en œuvre.

En effet, il convient de noter que l'on peut prévoir une étape additionnelle, après avoir disposé l'élément structurant ES, en l'occurrence la résine ESR thermoplastique ou thermodurcissable sur la première nappe NP'1 et avant de recouvrir le tout par la deuxième nappe NP'2, au cours de laquelle on replie une partie PR' de la première nappe NP'1 sur cette résine ESR thermoplastique ou thermodurcissable, cette partie PR' comportant ledit contour périphérique CP'. Avant repliement de la première nappe NP'1, cette partie PR' est par conséquent située externalement par rapport à la résine ESR thermoplastique ou thermodurcissable, mais ne l'est plus après repliement de cette première nappe NP'1.

Ceci permet de mieux maintenir la résine ESR thermoplastique ou thermodurcissable en place avant la mise sous pression, dans le moule, de l'empilement formé par la première nappe NP'1, la résine ESR thermoplastique ou thermodurcissable et la deuxième nappe NP'2. Ceci est d'autant plus avantageux que la résine, bien que solide lors de sa mise en place sur la première nappe, est relativement fragile, notamment en comparaison à une tresse ou plus géénralement à un ensemble de fibres.

Par ailleurs, la tenue mécanique est alors de meilleure qualité.

La figure 2(c) représente d'ailleurs, de façon schématique, l'empilement obtenu au voisinage du contour périphérique CP' de la première nappe NP'1 après repliement de la première nappe NP'1 sur la résine ESR thermoplastique ou thermodurcissable et après le recouvrement à la fois de cette résine ESR thermoplastique ou thermodurcissable et de la première nappe NP'1 par la deuxième nappe NP'2. Sur cette figure 2(c). On note d'ailleurs que la distance d, non nulle, déjà définie en référence à la figure 1(b) ou à la figure 1(c) correspond, sur la figure 2(c) à d = d₁ + d₂.

Ceci montre bien au passage que l'élément, structurant ES, en l'occurrence la résine thermoplastique ou thermodurcissable ESR est disposée à l'intérieur du contour périphérique CP' de la première nappe NP'1. Cela montre également, que la partie repliée PR' de la première nappe NP'1 est la partie située, avant repliement, externalement à la résine ESR, et dont la longueur totale vaut d₁ + d₂.

Lorsque cette étape additionnelle de repliement est envisagée, ce qui est le cas sur la figure 2(c), il est avantageux, avant ou après le repliement, mais de préférence avant, d'appliquer un adhésif sur la partie de la première nappe comportant le contour périphérique. Cela permet en effet d'améliorer le maintien de la partie PR' de la première nappe repliée contre la résine ESR thermoplastique ou thermodurcissable et donc de pouvoir, ensuite, disposer la deuxième nappe NP'2 en s'assurant que le positionnement relatif de la première nappe NP'1 et de ladite résine ESR thermoplastique ou thermodurcissable n'a pas évolué.

Il convient de noter que cette étape additionnelle n'est pas obligatoire. On peut donc tout à fait, dans le cadre de ce deuxième mode de réalisation, mettre en œuvre la configuration de la figure 1(b). La résine ESR thermoplastique ou thermodurcissable remplace alors simplement la tresse EST.

Par ailleurs, dans la variante où la deuxième nappe NP'2 ne recouvre que la première nappe NP'1, mais pas l'élément structurant ES, on retrouve la configuration de la figure 1(c) explicitée pour le premier mode de réalisation. La résine ESR thermoplastique ou thermodurcissable (ou selon le cas, la mousse syntactique) remplace alors simplement la tresse EST (ou selon le cas, l'ensemble de fibres, tissées ou non tissées).

Bien entendu, les commentaires réalisés ci-dessus à l'appui de la figure 2, sont transposables dans le cas où la résine ESR thermoplastique ou thermodurcissable est remplacée par une mousse syntactique MS.

Le matériau formant la première nappe NP'1 peut être choisi parmi des fibres de carbone, des fibres de verre ou des fibres de Kevlar^{®}.

Le matériau formant la deuxième nappe NP'2 peut être est choisi parmi des fibres de carbone, des fibres de verre ou des fibres de Kevlar^{®}.

On pourra notamment choisir une deuxième nappe NP'2 réalisée dans un matériau identique à celui formant la première nappe NP'1. En particulier, la deuxième nappe NP'2 peut être réalisée en fibres de carbone, tout comme la première nappe NP'1.

Là également, quelle que soit la nappe considérée, les fibres de carbone peuvent par exemple se présenter sous la forme d'un tissu en fibres de carbone.

De manière similaire au cas de la tresse ou de l'ensemble de fibres, la résine ESR thermoplastique ou thermodurcissable, solide, ou, selon le cas, la mousse syntactique, permet alors de définir la forme du contour du panneau composite PC' à fabriquer.

En pratique, on prévoit que la résine ESR thermoplastique ou thermodurcissable ou, selon le cas, la mousse syntactique présente déjà, au moment de son positionnement sur la première nappe NP'1, la forme souhaitée du contour pour le panneau composite PC'. Ceci peut être réalisé dans un moule spécifique. Dans ce cas, les étapes de fabrication du panneau composite décrites précédemment et réalisées dans le moule (injection de résine pour notamment imprégner les nappes; mise sous pression et température) servent à assurer le lien mécanique entre la première nappe NP'1, la résine ESR thermoplastique ou thermodurcissable ou la mousse syntactique MS et la deuxième nappe NP'2 pour former le panneau composite PC', la forme de son contour ayant été défini précédemment par la mise en forme de la résine ou de la mousse syntactique dans un moule spécifique.

La résine injectée dans le moule peut être une résine thermoplastique choisie parmi le polyuréthane (PU), le polyétherimide (PEI), ou le polyamide (PA). Les conditions d'injection (pression et température) sont les mêmes que celles décrites pour le premier mode de réalisation.

En variante, la résine injectée dans le moule peut être une résine thermodurcissable choisie parmi une résine thermodurcissable de type époxyde, phénolique ou uréthane.

L'étape consistant à presser l'empilement ayant été imprégné de résine dans le moule s'effectue dans les conditions de pression identiques à celles décrites précédemment pour le premier mode de réalisation. La même remarque peut être faite pour la température.

En outre, il convient de noter que l'étape de fourniture de la première nappe NP'1 peut consister à fournir une pluralité de premières nappes empilées. De manière similaire, l'étape de disposition de la deuxième nappe NP'2 peut consister à disposer une pluralité de deuxièmes nappes empilées, recouvrant toutes à la fois la première nappe NP'1 (ou ladite pluralité de premières nappes) et la résine ESR thermoplastique ou thermodurcissable formant élément structurant.

En outre, après avoir obtenu le panneau composite PC', on peut prévoir une post-cuisson, avantageusement réalisée dans le moule dans lequel le panneau composite a été formé, pour ajuster les propriétés mécaniques du composant. En pratique, on n'a alors pas besoin de sortir le panneau composite PC' du moule, la post-cuisson s'effectuant par mise sous chauffage du moule.

Les exemples d'application considérés précédemment visent des composant de siège d'avions. Bien entendu, d'autres applications, par exemple hors du domaine aéronautique, peuvent être envisagées.

Exemple : un test a été réalisé pour s'assurer de la faisabilité d'un panneau composite destiné à former panneau latéral pour un accoudoir de siège d'avion.

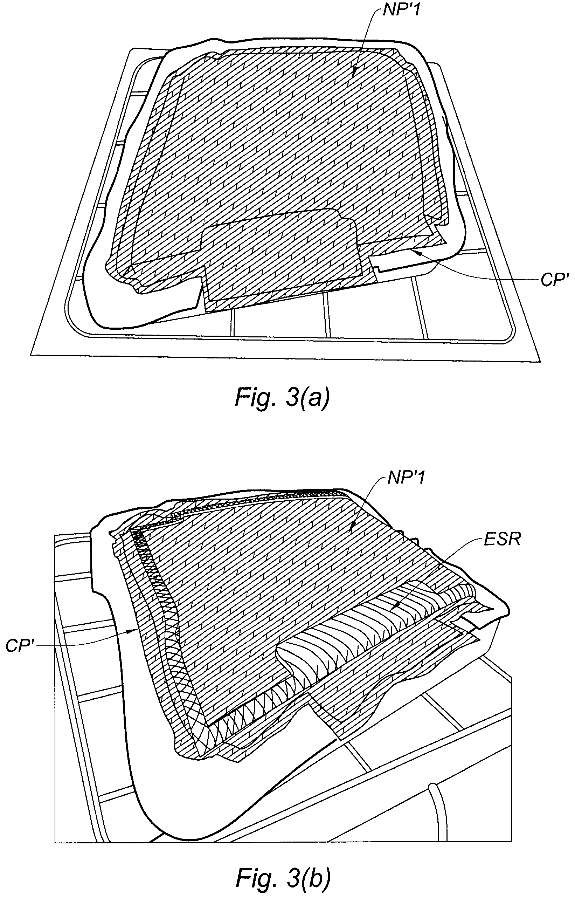

Une première nappe, tissée, en fibres de carbone a été fournie (Carbone Satin 94900 6K 5HS de la société BGF). On peut la voir sur la figure 3(a).

Puis, une résine thermodurcissable de type époxyde (MAGNOBOND^{®} 77-4 A/B) a été disposée sur la première nappe, sous forme solide. On peut voir le résultat sur la figure 3(b). La forme de la résine thermodurcissable de type époxyde a été définie préalablement dans un moule spécifique.

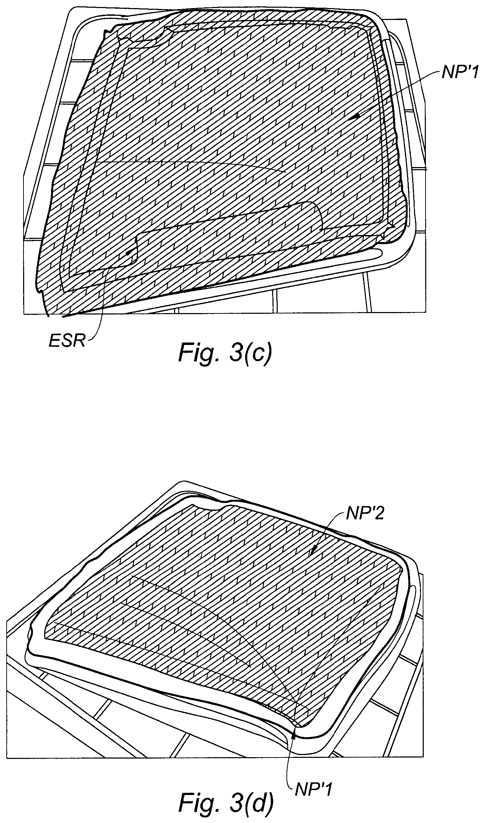

Ensuite, un repliement de la partie de la première nappe comportant ledit contour périphérique a été effectué sur la résine thermodurcissable de type époxyde. Afin d'aider au maintien de la première nappe sur la résine thermodurcissable de type époxyde, un adhésif (AIRTEC 2) a été vaporisé. On peut voir le résultat sur la figure 3(c).

Puis, une deuxième nappe identique à la première dans sa nature (Carbone Satin 94900 6K 5HS de la société BGF) a été déposée à la fois sur la première nappe et sur la résine thermodurcissable de type époxyde. On peut voir le résultat sur la figure 3(d).

Comme on peut le constater, dans cet exemple, l'empilement de la figure 3(d) a été réalisé sur une partie (inférieure) de moule.

Une résine thermodurcissable a ensuite été injectée dans le moule, en l'occurrence la résine EPOLAM 2015 SYSTEM de la société AXSON (Axson Technologies). Pour cette résine, l'injection a par ailleurs été réalisée à la température ambiante (23°C). Pour injecter la résine, le moule a en l'occurrence été mis sous vide (0,1MPa) pour aspirer la résine dans le moule. A cet effet, le moule est muni d'un orifice qui permet à une pompe de mettre le moule sous vide.

Ensuite, l'ensemble a été maintenu sous vide (0,1MPa), en l'occurrence pendant 6h. On comprend que ce maintient sous vide correspond à une mise sous pression de l'empilement placé dans le moule sous pression par les parties du moule. Aucun chauffage n'a été effectué pendant cette mise sous pression si bien que la mise sous pression a été réalisée à température ambiante (23°C) dans le moule.

Enfin, une post-cuisson a ensuite été effectuée pendant 24h à 80°C, sous vide (0,1Mpa), en l'occurrence dans le moule ayant servi à former le panneau composite.

Le panneau latéral d'accoudoir finalement obtenu est représenté sur la figure 3(e), côté intérieur sur la gauche et côté extérieur sur la droite.

## Revendications

1. Procédé de fabrication d'un panneau composite (PC, PC'), ledit procédé comprenant les étapes suivantes:
a) fournir au moins une première nappe (NP1, NP1') d'un matériau sec, tissé ou non tissé, ladite première nappe définissant un contour périphérique (CP, CP');
b) disposer un élément structurant (ES ; EST, EF, ESR) à l'intérieur du contour périphérique de ladite première nappe, sur au moins une partie de ce contour périphérique ; puis
c₁) soit disposer au moins une deuxième nappe (NP2, NP'2) d'un matériau sec, tissé ou non tissé, de sorte que ladite deuxième nappe recouvre à la fois la première nappe et l'élément structurant ;
c₂) soit replier au moins une partie (PR) de la première nappe (NP1, NP'1), cette partie comportant le contour périphérique (CP), pour recouvrir l'élément structurant (ES) puis disposer une deuxième nappe (NP2, NP'2) d'un matériau sec, tissé ou non tissé, de sorte que ladite deuxième nappe (NP2, NP'2) ne recouvre que la première nappe (NP1, NP'1), sans recouvrir l'élément structurant (ES) ;
l'empilement ainsi formé à l'issue de l'étape c₁) ou c₂) étant soit déjà dans un moule soit hors d'un moule et alors placé dans ledit moule,
d) injecter une résine thermoplastique ou thermodurcissable dans le moule, notamment pour imprégner les nappes (NP1, NP'1 ; NP2, NP'2) ;
e) presser l'ensemble dans le moule pour obtenir le panneau composite.

2. Procédé selon la revendication 1, dans lequel, dans le cas où l'étape c₁) est mise en œuvre, on replie, entre les étapes b) et c₁), une partie (PR') de la première nappe (NP1, NP1') sur l'élément structurant (ES), cette partie (PR') comportant ledit contour périphérique (CP).

3. Procédé selon l'une des revendications précédentes, dans lequel, avant ou après le repliement de la partie concernée de la première nappe (NP1, NP'1), mais de préférence avant, on applique un adhésif sur ladite partie (PR, PR') de la première nappe (NP1, NP'1) comportant ledit contour périphérique (CP, CP').

4. Procédé selon l'une des revendications précédentes, dans lequel le matériau formant la première nappe (NP1, NP'1) est choisi parmi des fibres de carbone, des fibres de verre ou des fibres de Kevlar^{®}.

5. Procédé selon l'une des revendications précédentes dans lequel le matériau formant la deuxième nappe (NP2, NP'2) est choisi parmi des fibres de carbone, des fibres de verre ou des fibres de Kevlar^{®}.

6. Procédé selon l'une des revendications précédentes, dans lequel la résine thermoplastique injectée à l'étape d) est choisie parmi le polyuréthane (PU), le polyétherimide (PEI), ou le polyamide (PA).

7. Procédé selon l'une des revendications 1 à 5, dans lequel la résine thermodurcissable injectée à l'étape d) est choisie parmi une résine thermodurcissable de type époxyde, phénolique ou uréthane.

8. Procédé selon l'une des revendications précédentes, dans lequel l'étape e) s'accompagne d'un chauffage.

9. Procédé selon l'une des revendications précédentes, dans lequel, à l'issue de l'étape e), on prévoit une étape f) de post-cuisson, avantageusement réalisée dans le moule ayant permis d'obtenir le panneau.

10. Procédé selon l'une des revendications précédentes, dans lequel l'élément structurant (ES) disposé au cours de l'étape b) sur la première nappe (NP1, NP'1) présente la forme souhaitée du contour périphérique (CP) du panneau composite (PC).

11. Procédé selon l'une des revendications précédentes, dans lequel l'élément structurant (ES) est choisi parmi :
- un ensemble de fibres tissées, par exemple sous la forme d'une tresse (EST) ;
- un ensemble de fibres (EF) non tissées;
- une résine (ESR) thermodurcissable ou thermoplastique, sous forme solide ;
- une mousse syntactique (MS).

12. Procédé selon la revendication précédente, dans lequel l'élément structurant (ES) consiste en un ensemble de fibres tissées ou non tissées, lesdites fibres étant choisies parmi des fibres de carbone, des fibres de verre ou des fibres de Kevlar^{®}.

13. Procédé selon l'une des revendications 10 ou 11, dans lequel l'ensemble de fibres tissées ou non tissées est pré-imprégné d'une résine thermoplastique ou thermodurcissable.

14. Procédé selon la revendication précédente, dans lequel l'ensemble de fibres tissées ou non tissées est pré-imprégné d'une résine thermoplastique choisie parmi le polyuréthane (PU), le polyétherimide (PEI), ou le polyamide (PA).

15. Procédé selon l'une des revendications 10 à 12, dans lequel l'ensemble de fibres tissées ou non tissées est pré-imprégné d'une résine thermodurcissable choisie parmi une résine thermodurcissable de type époxyde, phénolique ou uréthane.

16. Procédé selon l'une des revendications 10 à 13, dans lequel l'ensemble de fibres tissées se présente sous la forme d'une tresse (EST).

17. Procédé selon la revendication 10, dans lequel l'élément structurant (ES) est une résine (ESR) thermodurcissable de type époxyde.

## Patentansprüche

1. Verfahren zur Herstellung einer Verbundplatte (PC, PC'), wobei das Verfahren die folgenden Schritte umfasst:
a) Bereitstellen mindestens einer ersten Lage (NP1, NP1') aus einem trockenen, gewebten oder nicht gewebten Werkstoff, wobei die erste Lage eine umlaufende Kontur (CP, CP') definiert;
b) Anordnen eines Strukturelements (ES; EST, EF, ESR) im Inneren der umlaufenden Kontur der ersten Lage auf mindestens einem Teil dieser umlaufenden Kontur; danach
c₁) entweder Anordnen mindestens einer zweiten Lage (NP2, NP'2) aus einem trockenen, gewebten oder nicht gewebten Werkstoff, sodass die zweite Lage gleichzeitig die erste Lage und das Strukturelement bedeckt;
c₂) oder erneut Falten mindestens eines Teils (PR) der ersten Lage (NP1, NP'1), wobei dieser Teil die umlaufende Kontur (CP) beinhaltet, um das Strukturelement (ES) zu bedecken, danach Anordnen einer zweiten Lage (NP2, NP'2) aus einem trockenen, gewebten oder nicht gewebten Werkstoff, sodass die zweite Lage (NP2, NP'2) nur die erste Lage (NP1, NP'1) bedeckt, ohne das Strukturelement (ES) zu bedecken;
wobei die am Ende des Schrittes c₁) oder c₂) so gebildete Stapelung entweder bereits in einer Form ist, oder außerhalb einer Form, und somit in der Form platziert wird,
d) Injizieren eines thermoplastischen oder eines duroplastischen Harzes in die Form, insbesondere um die Lagen (NP1, NP'1; NP2, NP'2) zu imprägnieren;
e) Pressen der Einheit in der Form, um die Verbundplatte zu erhalten.

2. Verfahren nach Anspruch 1, wobei in dem Fall, in dem Schritt c₁) umgesetzt wird, zwischen den Schritten b) und c₁), ein Teil (PR') der ersten Lage (NP1, NPT) auf dem Strukturelement (ES) erneut gefaltet wird, wobei dieser Teil (PR') die umlaufende Kontur (CP) beinhaltet.

3. Verfahren nach einem der vorstehenden Ansprüche, wobei vor oder nach, jedoch vorzugsweise vor dem erneuten Falten des betreffenden Teils der ersten Lage (NP1, NP'1) ein Klebstoff auf dem Teil (PR, PR') der ersten Lage (NP1, NP'1) aufgetragen wird, der die umlaufende Kontur (CP, CP') beinhaltet.

4. Verfahren nach einem der vorstehenden Ansprüche, wobei der Werkstoff, der die erste Lage (NP1, NP'1) bildet, aus Kohlefasern, Glasfasern oder Kevlar^{®}-Fasern ausgewählt wird.

5. Verfahren nach einem der vorstehenden Ansprüche, wobei der Werkstoff, der die zweite Lage (NP2, NP'2) bildet, aus Kohlefasern, Glasfasern oder Kevlar^{®}-Fasern ausgewählt wird.

6. Verfahren nach einem der vorstehenden Ansprüche, wobei das in Schritt d) injizierte thermoplastische Harz aus Polyurethan (PU), Polyetherimid (PEI), oder Polyamid (PA) ausgewählt wird.

7. Verfahren nach einem der Ansprüche 1 bis 5, wobei das in Schritt d) injizierte duroplastische Harz aus einem duroplastischen Harz vom Typ Epoxyd, Phenol oder Urethan ausgewählt wird.

8. Verfahren nach einem der vorstehenden Ansprüche, wobei der Schritt e) von einer Heizung begleitet wird.

9. Verfahren nach einem der vorstehenden Ansprüche, wobei am Ende des Schrittes e) ein Schritt f) zum Nachbrennen vorgesehen ist, der vorteilhafterweise in einer Form durchgeführt wird, die es ermöglicht hat, die Platte zu erhalten.

10. Verfahren nach einem der vorstehenden Ansprüche, wobei das im Laufe des Schrittes b) auf der ersten Lage (NP1, NP'1) angeordnete Strukturelement (ES) die gewünschte Form der umlaufenden Kontur (CP) der Verbundplatte (PC) aufweist.

11. Verfahren nach einem der vorstehenden Ansprüche, wobei das Strukturelement (ES) ausgewählt ist aus:
- einer Einheit an gewebten Fasern, beispielsweise in der Form eines Zopfes (EST);
- einer Einheit an nicht gewebten Fasern (EF);
- einem duroplastischen oder thermoplastischen Harz (ESR) in fester Form;
- einem syntaktischen Schaumstoff (MS).

12. Verfahren nach dem vorstehenden Anspruch, wobei das Strukturelement (ES) aus einer Einheit an gewebten oder nicht gewebten Fasern besteht, wobei die Fasern aus Kohlefasern, Glasfasern oder Kevlar^{®}-Fasern ausgewählt werden.

13. Verfahren nach einem der Ansprüche 10 oder 11, wobei die Einheit an gewebten oder nicht gewebten Fasern mit einem thermoplastischen oder duroplastischen Harz vorimprägniert ist.

14. Verfahren nach dem vorstehenden Anspruch, wobei die Einheit an gewebten oder nicht gewebten Fasern mit einem thermoplastischen Harz vorimprägniert ist, das aus Polyurethan (PU), Polyetherimid (PEI), oder Polyamid (PA) ausgewählt wird.

15. Verfahren nach einem der Ansprüche 10 bis 12, wobei die Einheit an gewebten oder nicht gewebten Fasern mit einem duroplastischen Harz vorimprägniert ist, das aus einem duroplastischen Harz vom Typ Epoxyd, Phenol oder Urethan ausgewählt wird.

16. Verfahren nach einem der vorstehenden Ansprüche 10 bis 13, wobei sich die Einheit an gewebten Fasern in Form eines Zopfes (EST) darstellt.

17. Verfahren nach Anspruch 10, wobei das Strukturelement (ES) ein duroplastisches Harz (ESR) vom Typ Epoxyd ist.

## Claims

1. Process for manufacturing a composite panel (PC, PC'), said process comprising the following steps:
a) providing at least one first ply (NP1, NP1') of a woven or nonwoven dry material, said first ply defining a peripheral contour (CP, CP');
b) placing a structuring element (ES; EST, EF, ESR) inside the peripheral contour of said first ply, on at least one portion of this peripheral contour; then
c₁) either placing at least one second ply (NP2, NP'2) of a woven or nonwoven dry material, such that said second ply covers both the first ply and the structuring element;
c₂) or folding over at least one portion (PR) of the first ply (NP1, NP'1), this portion comprising the peripheral contour (CP), to cover the structuring element (ES), then placing a second ply (NP2, NP'2) of a woven or nonwoven dry material, such that said second ply (NP2, NP'2) covers only the first ply (NP1, NP'1), without covering the structuring element (ES);
the stack thus formed at the end of step c₁) or c₂) already being either in a mould or outside of a mould and thus placed in said mould,
d) injecting a thermoplastic or thermosetting resin into the mould, in particular to impregnate the plies (NP1, NP'1; NP2, NP'2);
e) pressing the assembly into the mould to obtain the composite panel.

2. Process according to claim 1, wherein, in the case where step c₁) is implemented, between steps b) and c₁), a portion (PR') of the first ply (NP1, NP1') is folded over on the structuring element (ES), this portion (PR') comprising said peripheral contour (CP).

3. Process according to one of the preceding claims, wherein, before or after the folding over of the portion in question of the first ply (NP1, NP'1), but preferably before, an adhesive is applied on said portion (PR, PR') of the first ply (NP1, NP'1) comprising said peripheral contour (CP, CP').

4. Process according to one of the preceding claims, wherein the material forming the first ply (NP1, NP'1) is selected from carbon fibres, glass fibres or Kevlar^{®} fibres.

5. Process according to one of the claims, wherein the material forming the second ply (NP2, NP'2) is selected from carbon fibres, glass fibres or Kevlar^{®} fibres.

6. Process according to one of the preceding claims, wherein the thermoplastic resin injected in step d) is selected from polyurethane (PU), polyetherimide (PEI), or polyamide (PA).

7. Process according to one of claims 1 to 5, wherein the thermosetting resin injected in step d) is selected from a thermosetting resin of the epoxide, phenolic or urethane type.

8. Process according to one of the preceding claims, wherein step e) is accompanied by heating.

9. Process according to one of the preceding claims, wherein, at the end of step e), a post-curing step f) is provided, advantageously carried out in the mould having made it possible to obtain the panel.

10. Process according to one of the preceding claims, wherein the structuring element (ES) placed during step b) on the first ply (NP1, NP'1) has the desired shape of the peripheral contour (CP) of the composite panel (PC).

11. Process according to one of the preceding claims, wherein the structuring element (ES) is selected from:
- an assembly of woven fibres, for example, in the form of a braid (EST);
- an assembly of nonwoven fibres (EF);
- a thermosetting or thermoplastic resin (ESR), in solid form;
- a syntactic foam (MS).

12. Process according to the preceding claim, wherein the structuring element (ES) consists of an assembly of woven or nonwoven fibres, said fibres being selected from carbon fibres, glass fibres or Kevlar^{®} fibres.

13. Process according to one of claims 10 or 11, wherein the assembly of woven or nonwoven fibres is pre-impregnated with a thermoplastic or thermosetting resin.

14. Process according to the preceding claim, wherein the assembly of woven or nonwoven fibres is pre-impregnated with a thermoplastic resin selected from polyurethane (PU), polyetherimide (PEI) or polyamide (PA).

15. Process according to one of claims 10 to 12, wherein the assembly of woven or nonwoven fibres is pre-impregnated with a thermosetting resin selected from a thermosetting resin of epoxide, phenolic or urethane type.

16. Process according to one of claims 10 to 13, wherein the assembly of woven fibres is presented in the form of a braid (EST).

17. Process according to claim 10, wherein the structuring element (ES) is an epoxide-type thermosetting resin (ESR).
